(19) Europäisches Patentamt / European Patent Office / Office européen des brevets

(11) **EP 4 117 277 B1**

(12) **FASCICULE DE BREVET EUROPEEN**

(45) Date de publication et mention
de la délivrance du brevet:
**21.08.2024 Bulletin 2024/34**

(21) Numéro de dépôt: **22180892.6**

(22) Date de dépôt: **24.06.2022**

(51) Classification Internationale des Brevets (IPC):
**H04N 23/745** (2023.01)    **H04N 25/531** (2023.01)

(52) Classification Coopérative des Brevets (CPC):
**H04N 23/745; H04N 25/531**

(54) **APPAREIL PHOTOGRAPHIQUE CORRIGEANT LES BANDES À LUMINOSITÉS DIFFÉRENTES DUES À UNE ILLUMINATION PULSÉE.**

FOTOAPPARAT DER KORRIGIERT UNTERSCHIEDLICHE HELLIGKEITSBÄNDER, DIE DURCH GEPULSTE BELEUCHTUNG VERURSACHT WERDEN.

PHOTGRAPHING DEVICE THAT CORRECTS DARK AND BRIGHT BANDS CAUSED BY A PULSED ILLUMINATION.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2021 FR 2107444**

(43) Date de publication de la demande:
**11.01.2023 Bulletin 2023/02**

(73) Titulaires:
• **STMicroelectronics (Research & Development) Limited**
**Marlow, Buckinghamshire SL7 1YL (GB)**
• **STMicroelectronics France**
**92120 Montrouge (FR)**

(72) Inventeurs:
• **BOURGE, Arnaud**
**75013 PARIS (FR)**
• **LE DAUPHIN, Tanguy**
**75013 PARIS (FR)**
• **DROUOT, Antoine**
**75017 PARIS (FR)**
• **STEWART, Brian**
**EDINBURGH, EH177PR (GB)**

(74) Mandataire: **Casalonga**
**Casalonga & Partners**
**Bayerstraße 71/73**
**80335 München (DE)**

(56) Documents cités:
**JP-A- 2006 245 784     US-A1- 2011 205 394**
**US-A1- 2016 006 919**

**Description**

Des modes de réalisation et de mise en oeuvre concernent les dispositifs photographiques, et plus particulièrement les dispositifs photographiques comportant un capteur photographique à balayage électronique.

Les capteurs photographiques à balayage électronique comportent une matrice de photodétecteurs dans laquelle les photodétecteurs sont agencés en colonnes et en lignes. Les capteurs photographiques sont configurés pour obtenir une image en effectuant une acquisition ligne par ligne des signaux émis par les photodétecteurs. Ce type d'acquisition est appelé balayage électronique (en anglais « rolling shutter »).

En particulier, le balayage électronique des lignes de photodétecteurs du capteur photographique est effectué selon une fréquence donnée. Ainsi, les différentes lignes de l'image ne sont pas acquises exactement au même moment. Le balayage électronique des lignes comprend pour chaque ligne une phase d'exposition effectuée pendant un temps d'intégration donné suivie d'une phase de lecture. Durant la phase d'exposition, les photodétecteurs de la ligne détectent la lumière qu'ils reçoivent. Puis, durant la phase de lecture, la quantité de lumière détectée par les photodétecteurs est lue.

Par ailleurs, il existe des sources lumineuses contrôlés par un signal de commande modulé par largeur d'impulsions (connus également par l'acronyme « PWM » de l'anglais « Pulse Width Modulation »). Par exemple, les sources de lumière à diodes électroluminescentes (« LED ») sont configurées pour commander une émission des diodes électroluminescentes par un signal modulé par largeur d'impulsions. En particulier, de telles sources de lumière sont commandées par des impulsions du signal de commande émises périodiquement selon une fréquence donnée.

L'intensité de la lumière émise par une telle source est plus importante au moment d'une impulsion du signal de commande puis diminue à la suite d'une impulsion jusqu'à la prochaine impulsion. Ainsi, l'intensité de la lumière émise par une telle source lumineuse varie au cours du temps. En particulier, une telle source lumineuse émet des impulsions lumineuses périodiquement. La période des impulsions lumineuses d'une telle source correspond, par exemple, à la durée entre deux fronts montants de deux impulsions successives.

Les capteurs photographiques peuvent acquérir des images illuminées par une telle source de lumière. Néanmoins, la période des impulsions lumineuses de la source peut être différente du temps d'intégration de chaque ligne du capteur photographique.

Ainsi, lors de l'acquisition d'une ligne de photodétecteurs du capteur photographique, l'intensité lumineuse captée peut être différente de l'intensité lumineuse captée lors d'une acquisition de lignes de photodétecteurs précédant ou succédant à la présente acquisition, celle-ci étant décalée temporellement par le temps de lecture.

Cela a pour effet d'obtenir des bandes à luminosités différentes dans l'image acquise. L'image acquise n'est alors pas conforme à la réalité perçue.

Plusieurs solutions ont été proposées afin d'éliminer ces bandes à luminosités différentes.

Par exemple, il a été proposé des capteurs photographiques configurés de façon à avoir un temps d'intégration multiple de celui de la période des impulsions lumineuses de la source. De la sorte, la durée d'exposition des photodétecteurs permet de recevoir une même intensité lumineuse moyenne. Néanmoins, la fréquence des impulsions lumineuses des sources n'est pas normalisée. Ainsi, de tels capteurs photographiques ne permettent pas d'éliminer les bandes à luminosité différentes pour les sources lumineuses ayant une fréquence d'impulsions lumineuses différente de celle pour laquelle le temps d'intégration a été adapté.

Par ailleurs, il a également été proposé d'effectuer une différence entre deux images acquises successivement de façon à détecter les bandes à luminosités différentes avant de les supprimer. Toutefois, une telle solution n'est pas adaptée dès lors que des objets ou des personnes se déplacent dans la scène acquise entre les deux images utilisées pour effectuer la différence.

Il a également été proposé d'ajouter un capteur de lumière ambiante de façon à détecter la fréquence des impulsions lumineuses de la source avant de régler le temps d'intégration du capteur photographique selon la fréquence mesurée des impulsions lumineuses de la source. Cette solution s'avère néanmoins coûteuse et nécessite de prévoir un emplacement pour le capteur de lumière ambiante dans l'appareil incorporant le capteur photographique. Cet emplacement additionnel peut être considéré comme inesthétique.

Les documents US 2016/006919 A1 et JP 2006 245784 A illustrent des solutions de l'état de la technique.

Il existe donc un besoin de proposer une solution simple et peu coûteuse d'acquisition d'image permettant d'obtenir une image d'une scène éclairée par une source lumineuse artificielle dépourvue de bandes à luminosités différentes indépendamment de la fréquence des impulsions lumineuses de la source.

Selon un aspect, il est proposé un appareil selon la revendication 1.

Du fait que le vecteur de signature est indépendant de la réflectance des objets de la scène photographiée et du niveau de lumière dans la scène, il est possible d'identifier simplement les bandes à luminosités différentes dans le vecteur de signature. Cela permet de déterminer précisément la fréquence des bandes à luminosités différentes, et donc la fréquence des impulsions lumineuses émises par ladite source.

En réglant le temps d'intégration du capteur photographique selon la fréquence déterminée des bandes à luminosités différentes, le balayage des lignes de photodétecteurs du capteur photographique est effectué de sorte que les lignes de photodétecteurs sont exposées à une même intensité lumineuse moyenne. De la sorte, les images acquises suite au réglage sont dépourvues de bandes à luminosités différentes.

Un tel appareil permet ainsi d'éliminer les bandes à luminosités différentes dans les images acquises suite au réglage.

Un tel appareil ne nécessite pas d'utiliser un capteur additionnel comme un capteur à lumière ambiante pour déterminer la fréquence des impulsions lumineuses de la source.

Ladite image acquise est constituée de pixels de différentes composantes de couleur.

Le fait de sommer la valeur des pixels de même composante de couleur de chaque ligne pour obtenir une valeur représentative permet d'améliorer la robustesse au bruit.

La division permet de rendre le vecteur de signature indépendant de la réflectance des objets de la scène photographiée et du niveau de lumière dans la scène.

Néanmoins, dans une variante ne faisant pas partie de l'invention revendiquée, pour générer un vecteur de signature associé à une composante de couleur de l'image, l'unité de traitement est configurée pour :

- pour chaque ligne de ladite image acquise:

  ∘ sommer la valeur des pixels de ladite composante de couleur de cette ligne de façon à obtenir pour cette ligne une valeur représentative de cette composante de couleur, puis
  ∘ calculer une valeur logarithmique de la valeur représentative de cette composante de couleur de la ligne,
  ∘ effectuer une différence entre la valeur logarithmique de la valeur représentative de cette composante de couleur de la ligne et une valeur logarithmique de la valeur représentative de la même composante de couleur d'une ligne adjacente de l'image.

Le fait de passer dans un domaine logarithmique permet de simplifier les calculs de l'unité de traitement pour générer le vecteur de signature par rapport à la division effectuée dans le mode de réalisation précédemment décrit. En outre, l'utilisation du domaine logarithmique permet de réduire la taille en mémoire nécessaire pour y enregistrer les résultats, par effet de compression naturel du logarithme.

De préférence, pour générer un vecteur de signature associé à une luminance de l'image, l'unité de traitement est configurée pour :

- pour chaque ligne de ladite image acquise :

  ∘ sommer la valeur des pixels de même composante de couleur de cette ligne de façon à obtenir pour cette ligne une valeur représentative pour chaque composante de couleur, puis

  ∘ calculer une valeur représentative de la luminance de la ligne à partir des valeurs représentatives des différentes composantes de couleur de cette même ligne et éventuellement d'une ligne adjacente,
  ∘ calculer une valeur logarithmique de la valeur représentative de la luminance de la ligne,
  ∘ effectuer une différence entre la valeur logarithmique de la valeur représentative de la luminance de la ligne et une valeur logarithmique de la valeur représentative de la luminance d'une ligne adjacente de l'image.

Le vecteur de signature associé à la luminance a l'avantage de présenter un rapport signal sur bruit élevé.

Avantageusement, le capteur photographique à balayage est configuré pour acquérir une succession d'images, chaque image de ladite succession d'images pouvant présenter une succession régulière de bandes. Les images acquises peuvent alors être constituées de pixels de différentes composantes de couleur.

Dans une autre variante ne faisant pas partie de l'invention revendiquée, pour générer un vecteur de signature associé à une composante de couleur de l'image, l'unité de traitement est configurée pour :

- pour chaque ligne de ladite image acquise:

  ∘ sommer la valeur des pixels de ladite composante de couleur de cette ligne de façon à obtenir pour cette ligne une valeur représentative de cette composante de couleur, puis
  ∘ diviser la valeur représentative de cette composante de couleur par une valeur représentative de cette même composante de couleur d'une même ligne de l'image suivante ou de l'image précédente de ladite succession d'images.

Néanmoins, en variante, pour générer le vecteur de signature associé à une composante de couleur de l'image, l'unité de traitement est configurée pour :

- pour chaque ligne de ladite image acquise:

  ∘ sommer la valeur des pixels de ladite composante de couleur de cette ligne de façon à obtenir pour cette ligne une valeur représentative de cette composante de couleur, puis
  ∘ calculer une valeur logarithmique de la valeur représentative de cette composante de couleur de la ligne,
  ∘ effectuer une différence entre la valeur logarithmique de la valeur représentative de cette composante de couleur de la ligne et une valeur logarithmique de la valeur représentative de cette même composante de couleur d'une même ligne de l'image suivante ou de l'image précédente de ladite succession d'images.

De préférence, pour générer un vecteur de signature associé à une luminance de l'image, l'unité de traitement est configurée pour :

- pour chaque ligne de ladite image acquise :

    ∘ sommer la valeur des pixels de même composante de couleur de cette ligne de façon à obtenir pour cette ligne une valeur représentative pour chaque composante de couleur, puis
    ∘ calculer une valeur représentative de la luminance de la ligne à partir des valeurs représentatives des différentes composantes de couleur de cette même ligne et d'une ligne adjacente,
    ∘ calculer une valeur logarithmique de la valeur représentative de la luminance de la ligne,
    ∘ effectuer une différence entre la valeur logarithmique de la valeur représentative de la luminance de la ligne et une valeur logarithmique de la valeur représentative de la luminance d'une même ligne de l'image suivante ou de l'image précédente de ladite succession d'images.

Selon un autre aspect, il est proposé un procédé de réglage d'un temps d'intégration d'un capteur photographique à balayage selon la revendication 2.

D'autres avantages et caractéristiques de l'invention apparaîtront à l'examen de la description détaillée de modes de mise en oeuvre et de réalisation, nullement limitatifs, et des dessins annexés sur lesquels :

    [Fig 1]
    [Fig 2]
    [Fig 3]
    [Fig 4]
    [Fig 5]
    [Fig 6]
    [Fig 7]
    [Fig 8]

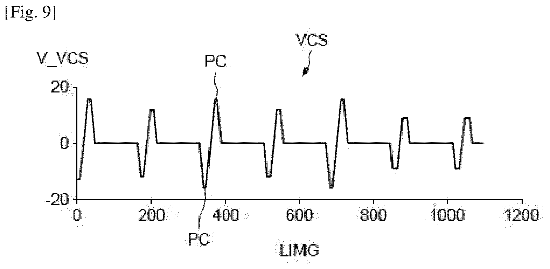

    [Fig 9] illustrent schématiquement des modes de réalisation et de mise en oeuvre de l'invention.

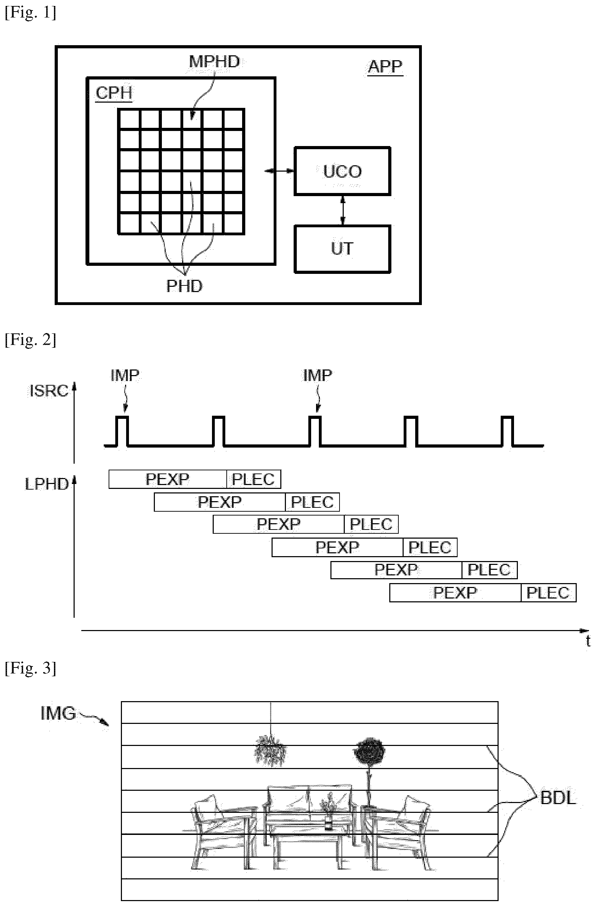

La figure 1 illustre un appareil APP selon un mode de réalisation de l'invention. L'appareil APP comprend un capteur photographique CPH, une unité de commande UCO et une unité de traitement UT.
Le capteur photographique CPH comprend une matrice de photodétecteurs MPHD. Les photodétecteurs PHD de la matrice MPHD sont agencés en lignes et en colonnes. Les photodétecteurs PHD sont associés à des composantes de couleur différentes, notamment à des composantes rouge R, verte Gr/Gb et bleue B. Par exemple, les photodétecteurs PHD peuvent être organisés selon une matrice de Bayer bien connue de l'homme du métier.

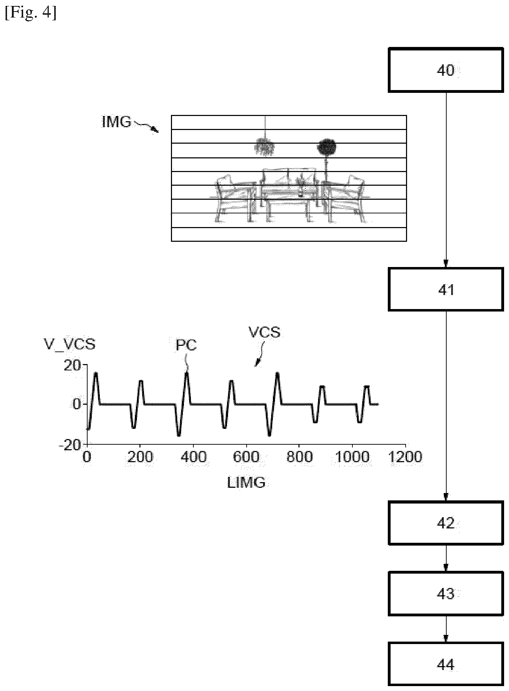

Le capteur photographique CPH est configuré pour obtenir une image d'une scène par acquisition des signaux générés par les photodétecteurs PHD à partir de la lumière captée par ces photodétecteurs PHD.
En particulier, l'acquisition des signaux générés par les photodétecteurs PHD est effectuée ligne par ligne. En d'autres termes, le capteur photographique CPH permet d'obtenir une image par un balayage des lignes de photodétecteurs PHD du capteur CPH.
Le balayage entraîne une acquisition en décalé dans le temps des signaux des photodétecteurs PHD des différentes lignes de photodétecteurs.
En particulier, comme représenté à la figure 2, l'acquisition d'une ligne de photodétecteurs PHD comporte une phase d'exposition PEXP dans lequel les photodétecteurs de la ligne détectent la lumière qu'ils reçoivent pendant un temps d'intégration donné. Puis, l'acquisition comprend une phase de lecture PLEC dans laquelle la quantité de lumière détectée par les photodétecteurs PHD est lue.
Le balayage des lignes de photodétecteurs PHD est effectué selon une fréquence de balayage définie par l'unité de commande UCO de l'appareil APP.
La figure 2 montre que les phases d'exposition PEXP des différentes lignes LPHD de photodétecteurs PHD sont décalées dans le temps.
Par ailleurs, la scène photographiée peut être illuminée par une source à impulsions lumineuses régulières. Par exemple, cette source peut être une source à diodes électroluminescentes.
Une telle source émet des impulsions de lumières selon une fréquence donnée.
Comme représenté à la figure 2, l'intensité ISRC de la lumière émise par une telle source est maximale au moment de l'impulsion IMP.
Le temps d'intégration du capteur photographique peut ne pas être un multiple de la période des impulsions lumineuses de la source illuminant la scène.
Ainsi, les phases d'exposition PEXP des différentes lignes de photodétecteurs peuvent être décalés par rapport aux impulsions lumineuses IMP de la source. De la sorte, l'intensité ISRC de lumière détectée par les différentes lignes peut varier. Comme représenté à la figure 3, l'image IMG obtenue par le capteur photographique présente alors des bandes BDL à luminosités différentes.
L'appareil APP est configuré pour mettre en oeuvre un procédé de réglage du temps d'intégration du capteur photographique, de façon à éliminer les bandes à luminosités différentes dans les images acquises. Un tel procédé de réglage est illustré à la figure 4.
Le procédé de réglage comprend une étape 40, dans laquelle le capteur photographique CPH effectue une acquisition d'au moins une image IMG d'une scène illuminée par une source à impulsions lumineuses régulière. L'appareil photographique peut notamment effectuer une acquisition d'une succession d'images.
Ladite au moins une image est ensuite transmise à l'unité de traitement, à l'étape 41.

Puis, à l'étape 42, l'unité de traitement UT génère au moins un vecteur de signature VCS à partir de ladite au moins une image acquise IMG. Ledit au moins un vecteur de signature est généré de façon à pouvoir distinguer les bandes à luminosités différentes dans l'image IMG, indépendamment de la réflectance des objets de la scène photographiée et du niveau de lumière dans la scène. De préférence, l'unité de traitement UT est configurée pour générer un vecteur de signature VCS pour chaque composante de couleur de l'image.

Ensuite, à l'étape 43, l'unité de traitement UT détermine la fréquence des bandes à luminosités différentes à partir dudit au moins un vecteur de signature VCS. La fréquence des bandes à luminosités différentes dépend de la fréquence des impulsions lumineuses et de la fréquence de balayage des lignes de photodétecteurs du capteur selon la formule suivante :

$$f_{bandes} = \frac{1}{f_{balayage}} * f_{impulsions}$$

, où $f_{bandes}$ est la fréquence de bandes à luminosités différentes par ligne de l'image, $f_{balayage}$ est la fréquence de balayage des lignes de photodétecteurs du capteur dans le temps et $f_{impulsions}$ est la fréquence des impulsions lumineuses dans le temps.

L'unité de traitement UT transmet ensuite la fréquence calculée des impulsions lumineuses de la source à la l'unité de commande UCO.

Enfin, à l'étape 44, l'unité de commande UCO adapte le temps d'intégration du capteur photographique de sorte que le temps d'intégration soit un multiple de la période des impulsions lumineuses de la source.

De la sorte, les bandes à luminosités différentes sont éliminées dans les prochaines images acquises NIMG, car l'intensité lumineuse moyenne lors des phases d'exposition des différentes lignes de photodétecteurs du capteur photographique reste constante.

Plus particulièrement, différents procédés peuvent être mis en oeuvre par l'unité de traitement pour obtenir un vecteur de signature.

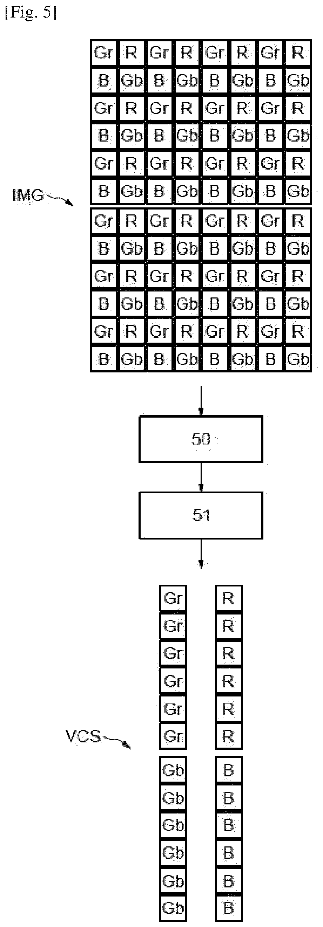

La figure 5 illustre un premier mode de mise en oeuvre d'un procédé de génération de vecteurs de signature VCS d'une image IMG acquise isolément ou bien dans une succession d'images.

Dans ce premier mode de mise en oeuvre, l'unité de traitement UT additionne, à l'étape 50, les valeurs des pixels de même composante de couleur d'une même ligne de l'image IMG pour chaque ligne de l'image, de façon à obtenir pour chaque ligne une valeur représentative de la ligne pour cette composante de couleur.

Puis, à l'étape 51, l'unité de traitement UT effectue, pour chaque ligne de l'image et pour chaque composante de couleur, une division entre la valeur représentative de cette composante de couleur de cette ligne et une valeur représentative de cette même composante de couleur d'une ligne adjacente de cette même image. En variante, l'unité de traitement effectue, pour chaque ligne de l'image et pour chaque composante de couleur, une division entre la valeur représentative de cette composante de couleur de cette ligne et une valeur représentative de cette même composante de couleur de la même ligne d'une image précédente ou d'une image suivante de ladite succession d'images acquises.

Les divisions effectuées permettent d'obtenir un vecteur de signature VCS pour chaque composante de couleur de l'image. Chaque vecteur de signature associé à une composante de couleur comprend le résultat des divisions effectuées pour chaque ligne de l'image pour cette composante de couleur.

Les vecteurs de signature VCS obtenus par les divisions susmentionnées présentent l'avantage d'être indépendants de la réflectance des objets de la scène et du niveau de lumière dans la scène. Les vecteurs de signature VCS permettent donc de visualiser principalement les changements de luminosité entre deux bandes à luminosités différentes apparaissant dans l'image générée. Il est alors plus simple de détecter les bandes à luminosités différentes à partir de tels vecteurs de signature.

Néanmoins, la division implique un coût en ressources de calcul important.

Afin de simplifier les calculs devant être réalisés par l'unité de traitement UT, il est avantageux de passer dans un domaine logarithmique pour éviter d'effectuer une division entre les valeurs représentatives.

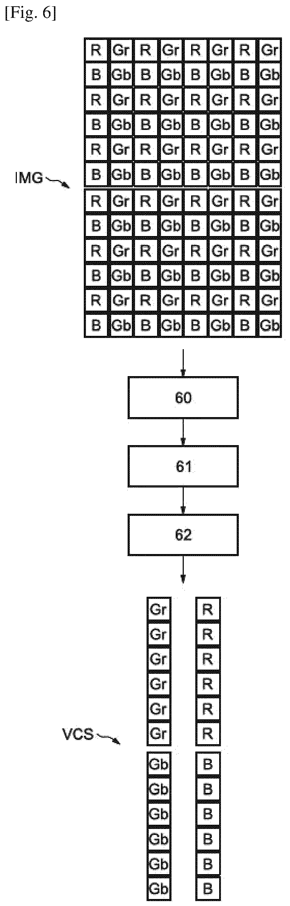

Les figures 6 à 8 ne relèvent pas de l'objet de la présente et ne sont présents qu'à titre illustratif.

La figure 6 illustre un deuxième mode de mise en oeuvre d'un procédé de génération de vecteurs de signature VCS d'une image IMG acquise isolément ou bien dans une succession d'images.

Dans ce deuxième mode de mise en oeuvre, l'unité de traitement UT additionne, à l'étape 60, les valeurs des pixels de même composante de couleur d'une même ligne de l'image pour chaque ligne de l'image, de façon à obtenir pour chaque ligne une valeur représentative de la ligne pour cette composante de couleur.

Puis, pour chaque ligne et pour chaque composante de couleur, l'unité de traitement UT calcule, à l'étape 61, une valeur logarithmique de la valeur représentative de cette composante de couleur dans cette ligne. En particulier, l'unité de traitement calcule le logarithme binaire de chaque valeur représentative des composantes de couleur de cette ligne.

L'unité de traitement UT calcule ensuite, à l'étape 62, pour chaque ligne de l'image et pour chaque composante de couleur, une différence entre la valeur logarithmique de la valeur représentative de cette composante de couleur pour cette ligne de l'image et une valeur logarithmique d'une valeur représentative de la même composante de couleur d'une ligne adjacente de l'image. En variante, l'unité de traitement UT peut calculer, pour chaque ligne de l'image et pour chaque composante de couleur, une différence entre la valeur logarithmique de la valeur représentative de cette composante de couleur pour cette ligne de l'image et une valeur logarithmique d'une valeur représentative de la même composante de couleur de la même ligne d'une image précédente ou d'une image suivante de ladite succession d'images acquises.

Les différences effectuées permettent d'obtenir un vecteur de signature VCS pour chaque composante de couleur de l'image. Chaque vecteur de signature associé à une composante de couleur comprend le résultat des différences effectuées pour chaque ligne de l'image pour cette composante de couleur.

Ainsi, dans ce mode de mise en oeuvre, l'unité de traitement effectue simplement une différence dans le domaine logarithmique au lieu d'une division. Cela permet de simplifier les calculs par l'unité de traitement UT.

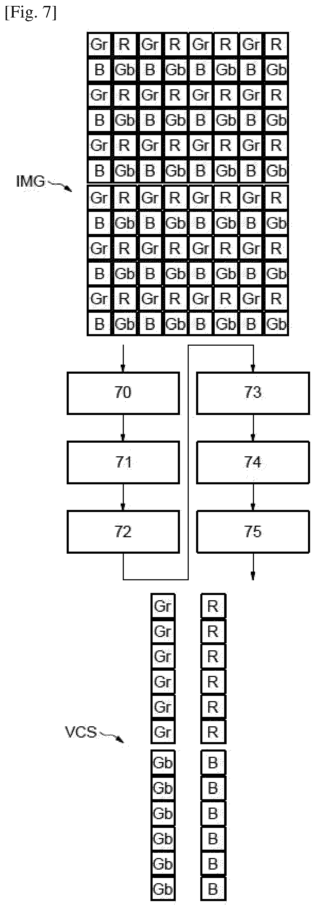

La figure 7 illustre un troisième mode de mise en oeuvre d'un procédé de génération de vecteurs de signature VCS d'une image IMG acquise isolément ou bien dans une succession d'images.

Dans ce troisième mode de réalisation, l'unité de traitement UT comptabilise, à l'étape 70, pour chaque ligne et pour chaque composante de couleur, un nombre de pixel à prendre en considération pour générer le vecteur de signature de cette composante de couleur. Par exemple, l'unité de traitement peut prendre en considération l'ensemble des pixels de même composante de couleur d'une ligne.

Néanmoins, en variante, l'unité de traitement peut prendre en considération seulement une partie des pixels de même composante de couleur d'une ligne. Cela permet d'exclure certains pixels ayant une valeur aberrante résultant d'une saturation du photodétecteur ayant généré cette valeur aberrante ou bien résultant d'un contour marqué dans la scène photographiée.

Puis, à l'étape 71, l'unité de traitement UT calcule une valeur logarithmique du nombre de pixels à prendre en considération. En particulier, l'unité de traitement UT calcule le logarithme binaire du nombre de pixels à prendre en considération.

L'unité de traitement UT additionne également, à l'étape 72, pour chaque ligne et pour chaque composante de couleur, les valeurs des pixels à prendre en considération de même composante de couleur d'une même ligne de l'image pour chaque ligne de l'image, de façon à obtenir pour chaque ligne une valeur représentative de la ligne pour cette composante de couleur.

Puis, à l'étape 73, pour chaque ligne et pour chaque composante de couleur, l'unité de traitement UT calcule une valeur logarithmique de la valeur représentative de cette composante de couleur dans cette ligne. En particulier, l'unité de traitement UT calcule le logarithme binaire de chaque valeur représentative des composantes de couleur de cette ligne.

L'unité de traitement UT calcule ensuite, à l'étape 74, pour chaque ligne et pour chaque composante de couleur, une valeur logarithmique normalisée en effectuant une différence entre la valeur logarithmique de la valeur représentative de cette composante de couleur et la valeur logarithmique du nombre de pixel à prendre en considération. Ainsi, une valeur logarithmique normalisée est similaire à une valeur moyenne des valeurs des pixels à prendre en considération de même composante de couleur d'une même ligne de l'image.

L'unité de traitement calcule ensuite, à l'étape 75, pour chaque ligne de l'image et pour chaque composante de couleur, une différence entre la valeur logarithmique normalisée associée à cette composante de couleur pour cette ligne de l'image et une valeur logarithmique normalisée associée à la même composante de couleur pour une ligne adjacente de l'image. En variante, l'unité de traitement peut calculer, pour chaque ligne de l'image et pour chaque composante de couleur, une différence entre la valeur logarithmique normalisée associée à cette composante de couleur pour cette ligne de l'image et une valeur logarithmique normalisée associée à la même composante de couleur pour la même ligne d'une image précédente ou d'une image suivante de ladite succession d'images acquises.

Ces différences effectuées par l'unité de traitement permettent d'obtenir un vecteur de signature VCS pour chaque composante de couleur de l'image. Chaque vecteur de signature VCS associé à une composante de couleur comprend le résultat des différences effectuées pour chaque ligne de l'image pour cette composante de couleur.

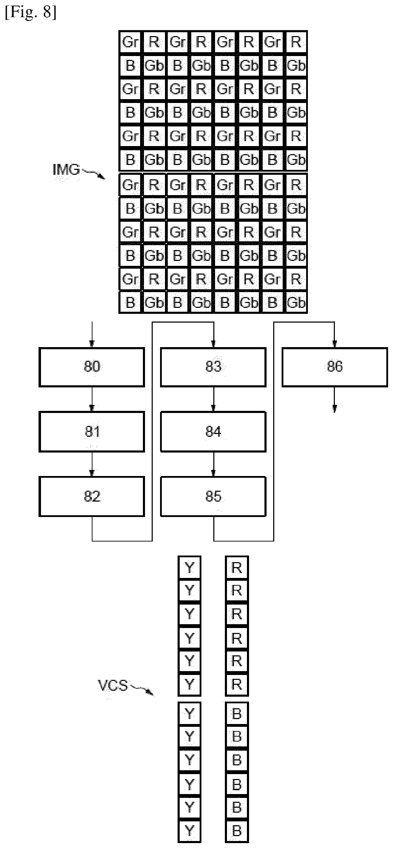

La figure 8 illustre un quatrième mode de mise en oeuvre d'un procédé de génération de vecteurs de signature VCS d'une image IMG acquise isolément ou bien dans une succession d'images.

Dans ce quatrième mode de réalisation, l'unité de traitement UT comptabilise, à l'étape 80, pour chaque ligne et pour chaque composante de couleur, un nombre de pixel à prendre en considération pour générer le vecteur de signature de cette composante de couleur.

L'unité de traitement UT additionne également, à l'étape 81, pour chaque ligne et pour chaque composante de couleur, les valeurs des pixels à prendre en considération de même composante de couleur d'une même ligne de l'image pour chaque ligne de l'image, de façon à obtenir pour chaque ligne une valeur représentative de la ligne pour cette composante de couleur.

Puis, à l'étape 82, l'unité de traitement UT remplace, pour chaque ligne, la valeur représentative de la composante verte de cette ligne par une valeur représentative d'une luminance Y de cette ligne. La valeur représentative de la luminance d'une ligne sont calculées par une moyenne pondérée des valeurs représentatives des composantes de couleur de cette ligne et éventuellement d'une ligne adjacente dans le cas d'une matrice de Bayer.

Puis, à l'étape 83, pour chaque ligne et pour les composantes de couleur rouges et bleu et pour la luminance, l'unité de traitement UT calcule une valeur logarithmique de la valeur représentative de cette composante de couleur ou de cette luminance dans cette ligne. En particulier, l'unité de traitement UT calcule le logarithme binaire de chaque valeur représentative des composantes de couleur rouge et bleu et de la luminance de cette ligne.

L'unité de traitement UT calcule également, à l'étape 84, une valeur logarithmique du nombre de pixels à prendre en considération. En particulier, l'unité de traitement calcule le logarithme binaire du nombre de pixels à prendre en considération.

L'unité de traitement UT calcule ensuite, à l'étape 85, pour chaque ligne et pour les composantes de couleur rouge et bleu et pour la luminance, une valeur logarithmique normalisée en effectuant une différence entre la valeur logarithmique de la valeur représentative de cette composante de couleur ou de la luminance et la valeur logarithmique du nombre de pixel à prendre en considération.

L'unité de traitement UT calcule ensuite, à l'étape 86, pour chaque ligne de l'image et pour les composantes de couleur rouge et bleu, une différence entre la valeur logarithmique normalisée associée à cette composante de couleur pour cette ligne de l'image et une valeur logarithmique normalisée associée à la même composante de couleur pour une ligne adjacente de l'image. L'unité de traitement UT calcule également, pour chaque ligne de l'image, une différence entre la valeur logarithmique normalisée associée à la luminance pour cette ligne de l'image et une valeur logarithmique normalisée associée à la luminance pour une ligne adjacente de l'image.

En variante, l'unité de traitement UT peut calculer, pour chaque ligne de l'image et pour les composantes de couleur rouge et bleu, une différence entre la valeur logarithmique normalisée associée à cette composante de couleur pour cette ligne de l'image et une valeur logarithmique normalisée associée à la même composante de couleur pour la même ligne d'une image précédente ou d'une image suivante de ladite succession d'images. L'unité de traitement UT calcule alors également, pour chaque ligne de l'image, une différence entre la valeur logarithmique normalisée associée à la luminance pour cette ligne de l'image et une valeur logarithmique normalisée associée à la luminance pour la même ligne d'une image précédente ou d'une image suivante de ladite succession d'images.

Ces différences effectuées par l'unité de traitement UT permettent d'obtenir des vecteurs de signature VCS pour les composantes de couleur rouge et bleu et pour la luminance de l'image.

Le vecteur de signature associé à la luminance a l'avantage de présenter un rapport signal sur bruit élevé.

La figure 9 illustre une représentation graphique d'un vecteur de signature VCS pouvant être obtenu par les modes de mise en oeuvre décrits précédemment.

Le vecteur de signatures VCS présentent des valeurs V_VCS pour les différentes lignes LIMG d'une image acquise par le capteur photographique. Comme représenté à la figure 9, les valeurs V_VCS varient uniquement pour les lignes en bordure des bandes à luminosités différentes présent dans l'image. Ces variations se présentent sous forme de pics d'amplitude PC à la figure 9.

La fréquence des bandes à luminosités différentes peut alors être extraite du vecteur de signature VCS afin d'effectuer un réglage de la du temps d'intégration du capteur photographique pour éliminer les bandes à luminosités différentes dans les prochaines images acquises de la scène, comme cela a été décrit précédemment.

**Revendications**

1. Appareil comprenant :

- un capteur photographique à balayage (CPH) configuré pour pouvoir acquérir une image (IMG), selon un temps d'intégration donné du capteur, d'une scène illuminée par une source à impulsions lumineuses régulières (IMP), les impulsions lumineuses (IMP) de la source étant émises périodiquement selon une période donnée, de sorte que lorsque le temps d'intégration du capteur est différent de la période des impulsions lumineuses, l'image acquise peut présenter une succession régulière de bandes à luminosités différentes (BDL), ladite image (IMG) acquise étant constituée de pixels de différentes composantes de couleur,
- une unité de traitement (UT) configurée pour :

  ○ générer un vecteur de signature (VCS) représentatif de la succession régulière de bandes à luminosités différentes (BDL) présentes dans l'image acquise par le capteur photographique, le vecteur de signature (VCS) étant indépendant de la réflectance des objets de la scène photographiée et du niveau de lumière dans la scène,
  ○ déterminer une fréquence des bandes (BDL) dans l'image à partir du vecteur de signature (VCS) généré,
  ○ déterminer la période des impulsions de la source à partir de la fréquence déterminée des bandes dans l'image,

- une unité de commande (UCO) configurée pour régler le temps d'intégration du capteur photographique (CPH) de sorte que le temps d'intégration soit un multiple de la période déterminée des impulsions lumineuses de la source,

l'appareil étant **caractérisé en ce que**, pour générer un vecteur de signature (VCS) associé à une composante de couleur de l'image, l'unité de traitement

(UT) est configurée pour :

- pour chaque ligne de ladite image (IMG) acquise :

  ∘ sommer la valeur des pixels de ladite composante de couleur de cette ligne de façon à obtenir pour cette ligne une valeur représentative de cette composante de couleur, puis

  ∘ diviser la valeur représentative de cette composante de couleur par une valeur représentative de cette même composante de couleur d'une ligne adjacente de l'image.

**2.** Procédé de réglage d'un temps d'intégration d'un capteur photographique à balayage (CPH), comprenant :

- une acquisition d'une image (IMG), selon un temps d'intégration donné, d'une scène illuminée par une source à impulsions lumineuses régulières (IMP), les impulsions lumineuses (IMP) de la source étant périodiquement selon une période donnée, de sorte que lorsque le temps d'intégration du capteur est différent de la période des impulsions lumineuses, l'image acquise (IMG) peut présenter une succession régulière de bandes à luminosités différentes (BDL), ladite image (IMG) acquise étant constituée de pixels de différentes composantes de couleur,

- une génération d'un vecteur de signature (VCS) représentatif de la succession régulière de bandes à luminosités différentes (BDL) présentes dans l'image acquise par le capteur photographique, le vecteur de signature (VCS) étant indépendant de la réflectance des objets de la scène photographiée et du niveau de lumière dans la scène,

- une détermination d'une fréquence des bandes dans l'image à partir du vecteur de signature (VCS) généré,

- une détermination de la période des impulsions de la source à partir de la fréquence déterminée des bandes dans l'image,

- un réglage du temps d'intégration du capteur photographique (CPH) de sorte que le temps d'intégration soit un multiple de la période des impulsions lumineuses de la source,

le procédé étant **caractérisé en ce qu'**il comprend, pour générer un vecteur de signature (VCS) associé à une composante de couleur de l'image :

- pour chaque ligne de ladite image (IMG) acquise :

  ∘ une somme de la valeur des pixels de ladite composante de couleur de cette ligne de façon à obtenir pour cette ligne une valeur représentative de cette composante de couleur, puis

  ∘ une division de la valeur représentative de cette composante de couleur par une valeur représentative de cette même composante de couleur d'une ligne adjacente de l'image.

**Patentansprüche**

**1.** Vorrichtung, die Folgendes umfasst:

- einen fotografischen Abtastsensor (CPH), der dazu konfiguriert ist, entsprechend einer vom Sensor gegebenen Integrationszeit ein Bild (IMG) einer Szene erfassen zu können, die von einer Quelle mit regelmäßigen Lichtimpulsen (IMP) beleuchtet wird, wobei die Lichtimpulse (IMP) der Quelle entsprechend einer gegebenen Zeitdauer periodisch ausgesendet werden, so dass das erfasste Bild eine regelmäßige Abfolge von Streifen mit unterschiedlichen Helligkeiten (BDL) aufweist, wenn die Integrationszeit des Sensors sich von einer Zeitdauer der Lichtimpulse unterscheidet, wobei das erfasste Bild (IMG) aus Pixeln mit verschiedenen Farbkomponenten besteht,

- eine Verarbeitungseinheit (UT), die für Folgendes konfiguriert ist:

  ∘ Erzeugen eines Signaturvektors (VCS), der die regelmäßige Abfolge von Streifen mit unterschiedlichen Helligkeiten (BDL) darstellt, die in dem vom fotografischen Sensor erfassten Bild vorhanden sind, wobei der Signaturvektor (VCS) unabhängig vom Reflexionsgrad von Objekten der fotografierten Szene und von der Lichtstärke in der Szene ist,

  ∘ Bestimmen einer Frequenz der Streifen (BDL) im Bild anhand des erzeugten Signaturvektors (VCS),

  ∘ Bestimmen der Zeitdauer der Impulse der Quelle anhand der bestimmten Frequenz der Streifen im Bild,

- eine Steuereinheit (UCO), die dazu konfiguriert ist, die Integrationszeit des fotografischen Sensors (CPH) so einzustellen, dass die Integrationszeit ein Vielfaches der bestimmten Zeitdauer der Lichtimpulse der Quelle ist, wobei die Vorrichtung **dadurch gekennzeichnet ist, dass** die Verarbeitungseinheit (UT) zum Erzeugen eines Signaturvektors (VCS), der einer Farbkomponente des Bilds zugeordnet ist, für Folgendes konfiguriert ist:

- für jede Zeile des erfassten Bilds (IMG):

   ◦ Summieren des Werts von Pixeln mit der Farbkomponente der Zeile, um einen Wert, der die Farbkomponente darstellt, für die Zeile zu erhalten, dann
   ◦ Teilen des Werts, der die Farbkomponente darstellt, durch einen Wert, der dieselbe Farbkomponente einer benachbarten Zeile des Bilds darstellt.

**2.** Verfahren zum Einstellen einer Integrationszeit für einen fotografischen Abtastsensor (CPH), das Folgendes umfasst:

   - Erfassen eines Bilds (IMG) einer Szene, die von einer Quelle mit regelmäßigen Lichtimpulsen (IMP) beleuchtet wird, entsprechend einer gegebenen Integrationszeit, wobei die Lichtimpulse (IMP) der Quelle entsprechend einer gegebenen Zeitdauer periodisch ausgesendet werden, so dass sich die Integrationszeit des Sensors von den Lichtimpulsen unterscheidet und das erfasste Bild (IMG) eine regelmäßige Abfolge von Streifen mit unterschiedlichen Helligkeiten (BDL) aufweisen kann, wobei das erfasste Bild (IMG) aus Pixeln mit verschiedenen Farbkomponenten besteht,
   - Erzeugen eines Signaturvektors (VCS), der die regelmäßige Abfolge von Streifen mit unterschiedlichen Helligkeiten (BDL) darstellt, die in dem vom fotografischen Sensor erfassten Bild vorhanden sind, wobei der Signaturvektor (VCS) unabhängig vom Reflexionsgrad von Objekten der fotografierten Szene und von der Lichtstärke in der Szene ist,
   - Bestimmen einer Frequenz der Streifen im Bild anhand des erzeugten Signaturvektors (VCS),
   - Bestimmen der Zeitdauer der Impulse der Quelle anhand der bestimmten Frequenz der Streifen im Bild,
   - Einstellen der Integrationszeit des fotografischen Sensors (CPH), so dass die Integrationszeit ein Vielfaches der Zeitdauer der Lichtimpulse der Quelle ist,

wobei das Verfahren **dadurch gekennzeichnet ist, dass** es zum Erzeugen eines Signaturvektors (VCS), der einer Farbkomponente des Bilds zugeordnet ist, Folgendes umfasst:

   - für jede Zeile des erfassten Bilds (IMG):

      ◦ eine Summe des Werts von Pixeln der Farbkomponente der Zeile, um einen Wert, der die Farbkomponente darstellt, für die Zeile zu erhalten, dann
      ◦ eine Teilung des Werts, der die Farbkomponente darstellt, durch einen Wert, der dieselbe Farbkomponente einer benachbarten Zeile des Bilds darstellt.

**Claims**

**1.** An apparatus comprising:

   - a scanning photographic sensor (CPH) configured to be able to acquire an image (IMG), according to a given integration time of the sensor, of a scene illuminated by a source with regular light pulses (IMP), the light pulses (IMP) of the source being emitted periodically according to a given period, so that when the integration time of the sensor is different from the period of the light pulses, the acquired image may have a regular succession of bands with different luminosities (BDL), said acquired image (IMG) being made up of pixels of different colour components,
   - a processing unit (UT) configured to:

      - generate a signature vector (VCS) representative of the regular succession of bands with different luminosities (BDL) present in the image acquired by the photographic sensor, the signature vector (VCS) being independent of the reflectance of the objects in the photographed scene and the light level in the scene,
      - determine a band frequency (BDL) in the image from the generated signature vector (VCS),
      - determine the period of the source pulses from the determined frequency of the bands in the image,
      - a control unit (UCO) configured to adjust the integration time of the photographic sensor (CPH) so that the integration time is a multiple of the determined period of the light pulses from the source,

the apparatus being **characterised in that**, to generate a signature vector (VCS) associated with a colour component of the image, the processing unit (UT) is configured to:

   - for each line of said acquired image (IMG):
   - sum the value of the pixels of said colour component of this line so as to obtain for this line a value representative of this colour component, then
   - divide the value representative of this colour component by a value representative of this same colour component of an adjacent line of the image.

2. A method for adjusting an integration time of a scanning photographic sensor (CPH), comprising:

- an acquisition of an image (IMG), according to a given integration time, of a scene illuminated by a source with regular light pulses (IMP), the light pulses (IMP) of the source being periodically according to a given period, so that when the integration time of the sensor is different from the period of the light pulses, the acquired image (IMG) may have a regular succession of bands with different luminosities (BDL), said acquired image (IMG) being made up of pixels of different colour components,

- a generation of a signature vector (VCS) representative of the regular succession of bands with different luminosities (BDL) present in the image acquired by the photographic sensor, the signature vector (VCS) being independent of the reflectance of the objects in the photographed scene and the light level in the scene,

- a determination of a band frequency in the image from the generated signature vector (VCS),

- a determination of the period of the source pulses from the determined frequency of the bands in the image,

- an adjustment of the integration time of the photographic sensor (CPH) so that the integration time is a multiple of the period of the light pulses from the source,

the method being **characterised in that** it comprises, to generate a signature vector (VCS) associated with a colour component of the image:

- for each line of said acquired image (IMG):
- a sum of the value of the pixels of said colour component of this line so as to obtain for this line a value representative of this colour component, then
- a division of the value representative of this colour component by a value representative of this same colour component of an adjacent line of the image.

[Fig. 1]

[Fig. 2]

[Fig. 3]

[Fig. 4]

[Fig. 5]

[Fig. 6]

EP 4 117 277 B1

[Fig. 7]

15

[Fig. 8]

[Fig. 9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016006919 A1

- JP 2006245784 A